# EUROPÄISCHE PATENTSCHRIFT

(11) **EP 1 728 547 B1**
(45) Veröffentlichungstag und Bekanntmachung des Hinweises auf die Patenterteilung: **01.01.2014**
(21) Anmeldenummer: 06004295.9
(22) Anmeldetag: 03.03.2006
(51) Int. Cl.: B01F 5/06, B29C 45/30

(54) **Vorrichtung zum Mischen und/oder Filtern von Schmelze einer Spritzgiessmaschine**
Device for mixing and/or filtering melt of an injection molding machine
Dispositif pour mélanger et/ou filtrer de la masse fondue d'une machine à mouler par injection

(30) Priorität: 30.05.2005 DE 102005025035
(43) Veröffentlichungstag der Anmeldung: 06.12.2006
(73) Patentinhaber: Potthoff, Rüdiger, 58566 Kierspe (DE)
(72) Erfinder: Potthoff, Rüdiger, 58566 Kierspe (DE)
(74) Vertreter: Köchling, Conrad-Joachim

(56) Entgegenhaltungen:
- WO-A-2004/037512
- DE-A1- 3 910 132
- FR-A- 1 016 815
- US-A- 3 941 355
- US-A- 3 989 434
- US-A- 4 434 053
- US-A- 4 591 274
- PATENT ABSTRACTS OF JAPAN Bd. 1999, Nr. 05, 31. Mai 1999 (1999-05-31) & JP 11 034108 A (MEIKI CO LTD), 9. Februar 1999 (1999-02-09)
- PATENT ABSTRACTS OF JAPAN Bd. 2000, Nr. 23, 10. Februar 2001 (2001-02-10) -& JP 2001 158029 A (JAPAN STEEL WORKS LTD:THE), 12. Juni 2001 (2001-06-12)

## Beschreibung

Die Erfindung betrifft eine Vorrichtung zum Mischen und/oder Filtern von Schmelze einer Spritzgießmaschine gemäß Oberbegriff des Anspruches 1.

In einer Spritzgießmaschine wird üblicherweise Kunststoffgranulat mittels einer Förderschnecke plastifiziert und die Schmelze über einen Heißkanal zu einer Kavität befördert. Um beispielsweise einen besonderen Farbton zu erzielen, wird hierzu das Granulat verschiedenfarbiger Kunststoffe der Förderschnecke zugeführt, plastifiziert und die plastifizierte Masse gut vermischt.

Auch kann es vorkommen, dass das Granulat unerwünschte Fremdstoffe, wie beispielsweise Fremdkörper aus Draht, Holz und dergleichen enthält. Um diese unerwünschten Fremdstoffe zu entfernen, muss die gesamte Spritzgießmaschine zum Stillstand gebracht werden und anschließend aufwendig gereinigt werden.

Aus der US-A-4591274 ist eine gattungsgemäße Vorrichtung bekannt. Hierbei sind die Misch- oder Verteilelemente durch außen umlaufende Nuten und Rippen gebildet, wobei die Rippen axial gerichtete Nuten aufweisen, die die benachbarten Nuten neben den Rippen verbinden.

Ausgehend von dieser Situation liegt der vorliegenden Erfindung die Aufgabe zugrunde, eine Vorrichtung zum Filtern und Mischen von Schmelze einer Spritzgießmaschine zu schaffen, die eine einheitlich gefärbte Schmelze ermöglicht, die ferner als Fremdstofffilter zwischen Förderschnecke und Heißkanal der Spritzgießmaschine dient, welche dabei schnell und einfach und verhältnismäßig kostengünstig zu fertigen und zu reinigen ist.

Zur Lösung dieser Aufgabe schlägt die Erfindung eine Vorrichtung gemäß Anspruch 1 vor.

Eine derartige Vorrichtung zum Mischen und/oder Filtern von Schmelze einer Spritzgießmaschine besteht aus einem Misch-/Filterkörper, welcher in einen Mantelkörper einsetzbar oder eingesetzt ist, wobei der Mantelkörper beispielsweise zwischen der Förderschnecke und dem Heißkanal der Spritzgießmaschine angeordnet ist. In der Montagesolllage wird die in der Förderschnecke plastifizierte Schmelze durch die eingangsseitig stirnseitige Öffnung des Misch-/Filterkörpers in diesen hineingeführt.

Beim Durchlaufen der in mehreren Reihen hintereinander in axialer Richtung des Misch-/Filterkörpers angeordneten und über den Umfang verteilten, etwa teilkreisförmigen Ausnehmungen wird die Schmelze zu einer einheitlichen Färbung vermischt und gleichzeitig werden Fremdkörper wie beispielsweise Draht, Späne, Holz oder dergleichen Fremdstoffe gefiltert.

Die an der eingangsseitigen Stirnseite ausgebildeten Öffnungen können erfindungsgemäß relativ groß ausgebildet sein, um Verstopfungen in diesem Bereich zu vermeiden.

Die etwa teilkreisförmigen Ausnehmungen können beispielsweise mittels eines Scheibenfräsers erzeugt werden, wobei die Schnitttiefe des Scheibenfräsers den Filter-/Mischquerschnitt des Misch-/Filterkörpers bestimmt.

Eine derartige Vorrichtung, bestehend aus einem Mantelkörper mit darin einzusetzenden Misch-/Filterkörper stellt eine besonders effektive Lösung der eingangs gestellten Aufgabe dar, die bei nur geringem Platzbedarf kostengünstig und einfach zu fertigen ist. Zudem kann der Misch-/Filterkörper zum Zwecke der Reinigung einfach aus dem Mantelkörper entnommen und von außen sehr einfach gereinigt werden.

Insbesondere kann bevorzugt vorgesehen sein, dass die Ausnehmungen über die Länge des Misch-/Filterkörpers durch eine axial verlaufende Trennwand geteilt sind, wobei an der ersten Längsseite der Trennwand eine erste axial gerichtete Nut angeordnet ist, an der zweiten Längsseite der Trennwand zwei weitere axial gerichtete Nuten angeordnet sind, die durch einen in Umfangsrichtung von der Trennwand bis zur ersten Nut verlaufenden Steg getrennt sind, wobei die erste weitere Nut mittels eines Sackloches mit der stirnseitigen Eingangsöffnung und die zweite weitere Nut mittels Lochungen mit der Ablauföffnung des Misch-/Filterkörpers verbunden ist, der durch eine axiale Lochung innerhalb der anderen Stirnseite des Misch-/Filterkörpers gebildet ist, wobei die Trennwand an dem Innenmantel des Mantelkörpers anliegt.

Hierbei fließt die Schmelze durch das Sackloch, welches mit der ersten weiteren Nut verbunden ist, in den Misch-/Filterkörper hinein. Aufgrund des in Umfangsrichtung verlaufenden Steges kann die Schmelze lediglich durch die zwischen der eingangsseitigen Stirnseite und dem Steg angeordneten etwa teilkreisförmigen Ausnehmungen in Richtung der ersten axialen Nut hindurchfließen und dabei vermischt beziehungsweise gefiltert werden. Sobald die Schmelze die erste axiale Nut erreicht hat, wendet sich die Fließrichtung in die entgegen gesetzte Richtung zur zweiten weiteren Nut, welche mittels Lochungen mit der Ablauföffnung des Misch-/Filterkörpers verbunden ist, und gelangt durch die axiale Lochung innerhalb der anderen Stirnseite des Misch-/Filterkörpers aus diesem heraus. Eventuell vorher in der Schmelze vorhandene Fremdkörper können die etwa teilkreisförmigen Ausnehmungen nicht durchfließen und werden in diesen festgehalten. Auch wird die Schmelze beim Durchfließen der Ausnehmungen zu einer einheitlichen Farbe vermischt. Es wird hiermit trotz kurzer Baulänge der Vorrichtung eine vorzügliche Mischung erreicht.

Dabei kann besonders bevorzugt vorgesehen sein, dass die Ausnehmungen über die Länge des Misch-/Filterkörpers durch zwei gegenüberliegende axial verlaufende Trennwände geteilt sind, wobei an jeder ersten Längsseite jeder Trennwand eine erste Nut angeordnet ist, an der zweiten Längsseite jeder Trennwand zwei weitere Nuten angeordnet sind, die durch einen in Umfangsrichtung von der Trennwand bis zur jeweiligen ersten Nut verlaufenden Steg getrennt sind, wobei jede erste weitere Nut mittels eines Sackloches mit der stirnseitigen Eingangsöffnung und jede zweite weitere Nut mittels Lochungen mit der Ablauföffnung des Misch- / Filterkörpers verbunden ist, die durch eine axiale Lochung innerhalb der anderen Stirnseite des Misch- / Filterkörpers gebildet ist, wobei jede Trennwand an dem Innenmantel des Mantelkörpers anliegt.

Ein derartiger Misch-/Filterkörper ermöglicht einen besonders hohen Durchsatz an Schmelze.

Weiter kann besonders bevorzugt vorgesehen sein, dass der Misch- / Filterkörper auf seiner Außenfläche zwei gegenüberliegende, mittels je eines Sackloches mit der stirnseitigen Eingangsöffnung verbundene erste Längsnuten und zwei weitere, gegenüberliegende, an die ersten Längsnuten angrenzende, mittels Lochungen mit der Ablauföffnung des Misch- / Filterkörpers, welcher durch eine axiale Lochung innerhalb der Auslassstirnseite des Misch- / Filterkörpers gebildet ist, verbundene, zweite Längsnuten aufweist, wobei zwischen den ersten Längsnuten und der jeweils benachbarten zweiten Längsnut ein Trennsteg ausgebildet ist, wobei die zwischen der ersten Längsnut und den weiteren Längsnuten ausgebildete Wandung und der Trennsteg an dem Innenmantel des Mantelkörpers anliegen.

Auch kann besonders bevorzugt vorgesehen sein, dass der Misch- / Filterkörper auf seiner Außenfläche parallel zueinander in Längsrichtung des zylindrischen Misch- / Filterkörpers über den Umfang verteilt verlaufende Längsnuten aufweist, wobei jede erste der aufeinander folgenden Längsnuten mittels je eines Sackloches mit der stirnseitigen Eingangsöffnung und jede zweite Längsnut mittels Lochungen mit der Ablauföffnung des Misch- / Filterkörpers verbunden ist, der durch eine axiale Lochung innerhalb der anderen Stirnseite des Misch- / Filterkörpers gebildet ist.

Auch bei dieser Lösung kann eine besonders große Menge an Schmelze schnell und effektiv vor allem gefiltert, aber auch gemischt werden.

Schließlich kann besonders bevorzugt vorgesehen sein, dass der Misch- / Filterkörper beispielsweise an der eingangsseitigen Stirnseite im Durchmesser vergrößert ist und einen Anschlag an den Mantel bildet.

Die Vergrößerung des Durchmessers bildet somit einen Flansch-Anschlag an dem Mantelkörper, in den der Misch-/Filterkörper eingesetzt ist, und dichtet gleichzeitig den Misch-/Filterkörper gegenüber dem Mantelkörper ab.

Ausführungsbeispiele der Erfindung sind in den Zeichnungen dargestellt und im Folgenden näher beschrieben. Es zeigt:
- Figur 1: ein erstes Ausführungsbeispiel perspektivisch von hinten gesehen;
- Figur 2: desgleichen perspektivisch von vorn gesehen;
- Figur 3: ein weiteres Ausführungsbeispiel in Seitenansicht geschnitten;
- Figur 4: desgleichen in Seitenansicht;
- Figur 5: ein weiteres Ausführungsbeispiel in Seitenansicht;
- Figur 6: das Ausführungsbeispiel aus Figur 3 im Längsschnitt.

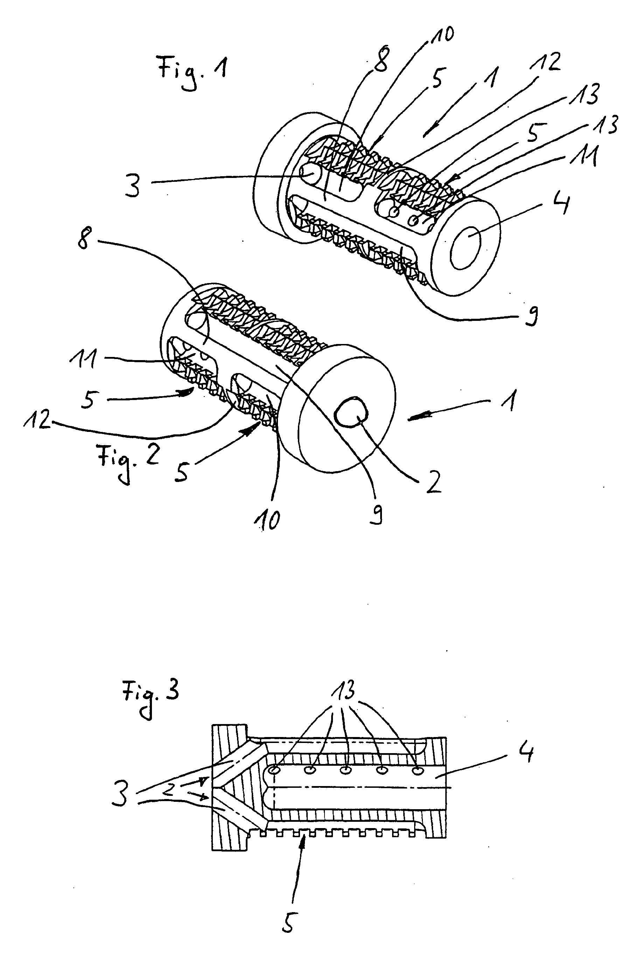

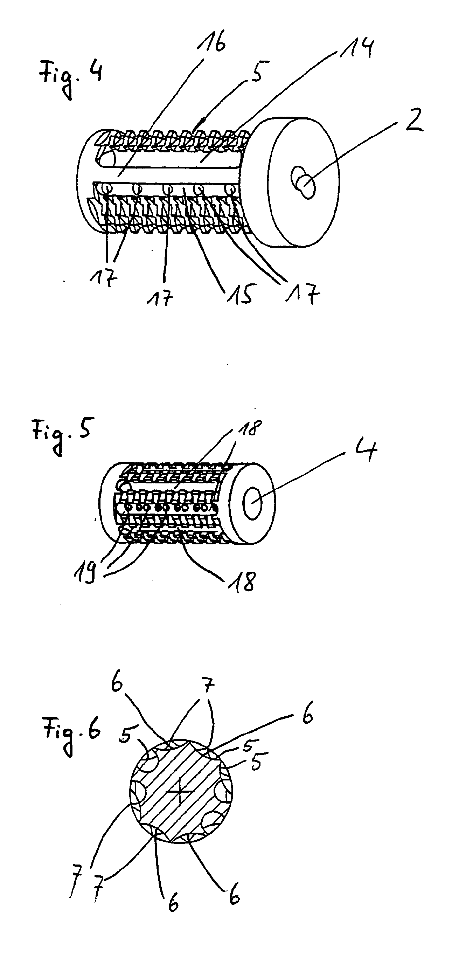

In den Figuren ist eine Vorrichtung zum Mischen und/oder Filtern von Schmelze für eine Spritzgießmaschine gezeigt. Es ist dabei zumindest eine Förderschnecke und ein Heißkanal vorgesehen, wobei die Vorrichtung zwischen der Förderschnecke und dem Heißkanal der Spritzgießmaschine angeordnet ist. Die Vorrichtung besteht aus einem in den Zeichnungen nicht gezeigten rohrförmigen Mantelkörper, in den ein zylindrischer Misch-/Filterkörper 1 eingesetzt ist. Der Misch-/Filterkörper 1 weist eingangsseitig stirnseitig mindestens eine sacklochartige Öffnung 2 auf. Die Öffnung 2 steht, wie insbesondere aus Figur 3 ersichtlich, über erste Verbindungskanäle 3 mit der Außenseite des Misch-/Filterkörpers 1 in Verbindung und ist in der Montagesolllage vom Mantel umgeben. Der Misch-/Filterkörper 1 weist zweite Verbindungskanäle auf, die den vom Mantel umgebenden Raum mit einer an der anderen Stirnseite ausgebildeten sacklochartigen Ablauföffnung 4 verbinden. Zwischen den radial aus der Außenseite radial des Misch-/Filterkörpers 1 ausmündenden Mündungen der ersten Verbindungskanäle 3 und den in der Außenseite radial vorgesehenen Einmündungen der zweiten Verbindungskanäle können Vorsprünge, Fließteiler, Rinnen, Trennwände oder dergleichen Sperr- und/oder Verteilelemente auf dem Mantel ausgebildet sein. Diese sind im Ausführungsbeispiel durch eine Vielzahl von mehreren Reihen hintereinander in axialer Richtung angeordneten und über den Umfang verteilten, etwa teilkreisförmigen Ausnehmungen 5 gebildet. Dabei folgt in Umfangsrichtung verteilt jeder etwa teilkreisförmigen Ausnehmung 5 eine weitere gleiche Ausnehmung 5. Wie insbesondere aus Figur 6 ersichtlich, ist dem Tal 6 einer jeden etwa teilkreisförmigen Ausnehmung 5 der ersten Reihe in axialer Richtung die Spitze 7 der Ausnehmungen 5 der zweiten Reihe benachbart. In axialer Richtung folgen weitere Reihen von Ausnehmungen 5, welche jeweils entsprechend zueinander versetzt ausgerichtet sind, so dass jeweils jede zweite Reihe deckungsgleich ausgerichtet ist. Dabei liegen die Spitzen 7 an dem Innenmantel des Mantelkörpers an.

Bei dem in den Figuren 1 und 2 gezeigten Ausführungsbeispiel sind die Ausnehmungen 5 über die Länge des Misch-/Filterkörpers 1 durch eine axial verlaufende Trennwand 8 geteilt, die am Mantel des Mantelkörpers anliegt. An der ersten Längsseite der Trennwand 8 ist eine erste axial gerichtete Nut 9 angeordnet. An der zweiten Längsseite der Trennwand 8 sind zwei weitere axial gerichtete Nuten 10, 11 angeordnet. Die weiteren axial gerichteten Nuten 10,11 sind durch einen in Umfangsrichtung von der Trennwand 8 bis zur ersten Nut 9 verlaufenden Steg 12 getrennt. Dabei ist die erste weitere Nut 10 mittels eines Loches mit der stirnseitigen Eingangsöffnung 2 und die zweite weitere Nut 11 mittels Lochungen 13 mit der Ablauföffnung 4 des Misch-/Filterkörpers 1 verbunden. Die Ablauföffnung 4 des Misch-/Filterkörpers 1 ist dabei durch eine axiale Sack-Lochung innerhalb der anderen Stirnseite des Misch-/Filterkörpers 1 gebildet. Die Trennwand 8 liegt in der Montagesolllage an dem Innenmantel des Mantelkörpers an.

In einem weiteren Ausführungsbeispiel sind die Ausnehmungen 5 über die Länge des Misch-/Filterkörpers 1 durch zwei gegenüberliegende axial verlaufende Trennwände 8 geteilt. Dabei ist an jeder ersten Längsseite jeder Trennwand 8 eine erste Nut 9 angeordnet. An der zweiten Längsseite jeder Trennwand 8 sind zwei weitere Nuten 10, 11 angeordnet, die durch einen in Umfangsrichtung von der Trennwand 8 bis zur jeweiligen ersten Nut 9 verlaufenden Steg 12 getrennt sind. Dabei ist jede erste weitere Nut 10 mittels eines Loches mit der stirnseitigen Eingangsöffnung und jede zweite weitere Nut 11 mittels Lochungen 13 mit der Ablauföffnung 4 des Misch-/Filterkörpers 1 verbunden.

Die Ablauföffnung 4 des Misch-/Filterkörpers 1 ist durch eine axiale Sack-Lochung innerhalb der anderen Stirnseite des Misch-/Filterkörpers 1 gebildet. Jede Trennwand 8 liegt in der Montagesolllage am Innenmantel des Mantelkörpers an.

In einem weiteren, in Figur 4 gezeigten Ausführungsbeispiel weist der Misch-/Filterkörper 1 auf seiner Außenfläche zwei gegenüberliegende, mittels je einer Bohrung mit der stirnseitigen Eingangsöffnung 2 verbundene erste Längsnuten 14 und zwei weitere gegenüberliegende, an die ersten Längsnuten 14 angrenzende, mittels Lochungen 17 mit der Ablauföffnung 4 des Misch-/Filterkörpers 1 verbundene zweite Längsnuten 15 auf. Dabei ist zwischen den ersten Längsnuten 14 und der jeweils benachbarten zweiten Längsnut 15 ein Trennsteg 16 ausgebildet. Der zwischen der ersten Längsnut 14 und der jeweiligen weiteren Längsnut 15 ausgebildete Trennsteg 16 liegt in der Montagesolllage an dem Innenmantel des Mantelkörpers an.

Insbesondere aus Figur 5 ersichtlich, weist der Misch-/Filterkörper 1 auf seine Außenfläche parallel zueinander, in Längsrichtung des zylindrischen Misch-/Filterkörpers 1 über den Umfang verteilt, verlaufende Längsnuten 18 auf. Dabei ist jede erste, der aufeinander folgenden Längsnuten 18 mittels je eines Loches mit der stirnseitigen Eingangsöffnung 2 und jede weitere Längsnut 18 mittels Lochungen 19 mit der Ablauföffnung 4 des Misch-/Filterkörpers 1 verbunden. Die Ablauföffnung 4 ist dabei durch eine axiale Sack-Lochung an der anderen Stirnseite des Misch-/Filterkörpers 1 gebildet.

Wie insbesondere aus den Figuren 1 bis 4 ersichtlich, weist der Misch-/Filterkörper 1 an der eingangsseitigen Stirnseite einen im Durchmesser vergrößerten Flanschrand auf und bildet somit einen Anschlag für den Mantel und dichtet den Misch-/Filterkörper 1 gegenüber dem Mantel ab.

Die Erfindung ist nicht auf das Ausführungsbeispiel beschränkt, sondern ihre Ausführungsformen werden in den beiliegenden Ansprüchen definiert.

## Patentansprüche

1. Vorrichtung zum Mischen und / oder Filtern von Schmelze einer Spritzgießmaschine mit zumindest einer Förderschnecke und einem Heißkanal, wobei die Vorrichtung vorzugsweise zwischen der Förderschnecke und dem Heißkanal der Spritzgießmaschine angeordnet ist, bestehend aus einem Mantelkörper, in den ein zylindrischer Misch- / Filterkörper (1) eingesetzt ist, der in Fließrichtung der Schmelze eingangsseitig stirnseitig mindestens eine sacklochartige Öffnung (2) / Kanal aufweist, die der über erste Verbindungskanäle (3) mit der radialen Außenseite des Misch- / Filterkörpers (1) in Verbindung steht, die vom Mantel umgeben ist, und der radial zweite Verbindungskanäle aufweist, die den vom Mantel umgebenen Raum mit einer an der anderen Stirnseite ausgebildeten sacklochartigen Ablauföffnung (4) verbinden, wobei zwischen den aus der Außenseite des Misch- / Filterkörpers (1) ausmündenden Mündungen der ersten Verbindungskanäle (3) und den in der Außenseite vorgesehenen Einmündungen der zweiten Verbindungskanäle Vorsprünge, Fließteiler, Rinnen, Trennwände oder Sperr- und / oder Verteilelemente auf dem Mantel ausgebildet sind, **dadurch gekennzeichnet, dass** die auf der Außenseite des Misch- / Filterkörpers (1)ausgebildeten Vorsprünge, Fließteiler, Rinnen, Trennwände oder Sperr- und/oder Verteilelemente durch eine Vielzahl von in mehreren Reihen hintereinander in axialer Richtung angeordneten und über den Umfang verteilten, etwa teilkreisförmigen Ausnehmungen (5) gebildet sind, wobei in Umfangsrichtung verteilt jeder etwa teilkreisförmigen Ausnehmung (5) eine weitere gleiche Ausnehmung (5) folgt, wobei axial dem Tal (6) einer jeden etwa teilkreisförmigen Ausnehmung (5) der ersten Reihe die Spitze (7) der Ausnehmungen (5) der zweiten Reihe benachbart ist, und in axialer Richtung wechselweise weitere Reihen von Ausnehmungen (5) folgen, die jeweils entsprechend zueinander versetzt ausgerichtet sind, so dass jeweils jede zweite Reihe deckungsgleich ausgerichtet ist, wobei die Spitzen (7) an dem Innenmantel des Mantelkörpers anliegen, wobei die zweiten Verbindungskanäle in axialer Richtung gesehen im gleichen oder überlappenden Abschnitt wie die Vorsprünge, Fließteiler, Rinnen, Trennwände oder Sperr- und/oder Verteilelemente angeordnet sind.

2. Vorrichtung nach Anspruch 1, **dadurch gekennzeichnet, dass** die Ausnehmungen (5) über die Länge des Misch- / Filterkörpers (1) durch eine axial verlaufende Trennwand (8) geteilt sind, wobei an der ersten Längsseite der Trennwand (8) eine erste axial gerichtete Nut (9) angeordnet ist, an der zweiten Längsseite der Trennwand (8) zwei weitere axial gerichtete Nuten (10,11) angeordnet sind, die durch einen in Umfangsrichtung von der Trennwand (8) bis zur ersten Nut (9) verlaufenden Steg (12) getrennt sind, wobei die erste weitere Nut (10) mittels eines Loches mit der stirnseitigen Eingangsöffnung (2) und die zweite weitere Nut (11) mittels Lochungen (13) mit der Ablauföffnung (4) des Misch- / Filterkörpers (1) verbunden ist, der durch eine axiale Lochung innerhalb der anderen Stirnseite des Misch-/ Filterkörpers (1) gebildet ist, wobei die Trennwand (8) an dem Innenmantel des Mantelkörpers anliegt.

3. Vorrichtung nach Anspruch 1, **dadurch gekennzeichnet, dass** die Ausnehmungen (5) über die Länge des Misch- / Filterkörpers (1) durch zwei gegenüberliegende axial verlaufende Trennwände (8) geteilt sind, wobei an jeder ersten Längsseite jeder Trennwand (8) eine erste Nut (5) angeordnet ist, an der zweiten Längsseite jeder Trennwand (8) zwei weitere Nuten (10,11) angeordnet sind, die durch einen in Umfangsrichtung von der Trennwand (8) bis zur jeweiligen ersten Nut (9) verlaufenden Steg (12) getrennt sind, wobei jede erste weitere Nut (10) mittels eines Loches mit der stirnseitigen Eingangsöffnung (2) und jede zweite weitere Nut (11) mittels Lochungen (13) mit der Ablauföffnung (4) des Misch- / Filterkörpers (1) verbunden ist, die durch eine axiale Sack-Lochung an der anderen Stirnseite des Misch- / Filterkörpers (1) gebildet ist, wobei jede Trennwand (8) an dem Innenmantel des Mantelkörpers anliegt.

4. Vorrichtung nach Anspruch 1, **dadurch gekennzeichnet, dass** der Misch- / Filterkörper (1) auf seiner Außenfläche zwei gegenüberliegende, mittels je eines Loches mit der stirnseitigen Eingangsöffnung (2) verbundene erste Längsnuten (14) und zwei weitere, gegenüberliegende, an die ersten Längsnuten (14) angrenzende, mittels Lochungen (17) mit der Ablauföffnung (4) des Misch- / Filterkörpers (1), welcher durch eine axiale Lochung innerhalb der Auslassstirnseite des Misch- / Filterkörpers (1) gebildet ist, verbundene, zweite Längsnuten (15) aufweist, wobei zwischen den ersten Längsnuten (14) und der jeweils benachbarten zweiten Längsnut (15) ein Trennsteg (16) ausgebildet ist, der in der Montagesolllage an dem Innenmantel des Mantelkörpers anliegt.

5. Vorrichtung nach Anspruch 1 oder 2, **dadurch gekennzeichnet, dass** der Misch- / Filterkörper (1) auf seiner Außenfläche parallel zueinander in Längsrichtung des zylindrischen Misch- / Filterkörpers (1) über den Umfang verteilt verlaufende Längsnuten (18) aufweist, wobei jede erste der aufeinander folgenden Längsnuten (18) mittels je eines Loches mit der stirnseitigen Eingangsöffnung (2) und jede zweite Längsnut (18) mittels Lochungen (19) mit der Ablauföffnung (4) des Misch- / Filterkörpers (1) verbunden ist, der durch eine axiale Sack-Lochung an der anderen Stirnseite des Misch- / Filterkörpers (1) gebildet ist.

6. Vorrichtung nach einem der Ansprüche 1 bis 5, **dadurch gekennzeichnet, dass** der Misch- / Filterkörper (1) an der eingangsseitigen Stirnseite im Durchmesser zu einem Flansch vergrößert ist und einen axialen Anschlag für den Mantel bildet.

## Claims

1. A device for mixing and/or filtering melt of an injection molding machine with at least one screw conveyor, and a hot runner, the device being preferably arranged between the screw conveyor and the hot runner of the injection molding machine, consisting of a jacket body in which a cylindrical mixing/filtering body (1) is inserted that has in the direction of flow of the melt at the front-side inlet at least one blind hole-like opening (2)/channel, which is in connection by first connecting passages (3) with the radial outer side of the mixing/filtering body (1), which is surrounded by the jacket, and which comprises radial second connecting passages, which connect the space surrounded by the jacket with a blind hole-like outlet opening (4) formed at the other front side, between the orifices of the first connecting passages (3) ending on the outer side of the mixing/filtering body (1) and the orifices of the second connecting passages provided in the outer side, projections, flow dividers, gutters, partition walls, or blocking and/or distributing elements being formed on the jacket, **characterized in that** the projections, flow dividers, gutters, partition walls, or blocking and/or distributing elements provided on the outer side of the mixing/filtering body (1) are formed by a plurality of approximately part-circular recesses (5) arranged in a plurality of rows one behind each other in the axial direction and distributed over the periphery, to each such part-circular recess (5) another identical recess (5) following in the circumferential direction, and to the valley (6) of each such part-circular recess (5) of the first row, the tip (7) of the recesses (5) of the second row being axially adjacent, and alternately further rows of recesses (5) following in the axial direction, which are respectively arranged in an offset position relative to each other so that respectively every second row is congruently oriented, with the tips (7) bearing against the inner jacket of the jacket body, and the second connecting passages being arranged, viewed in the axial direction, in the same or overlapping section as the projections, flow dividers, gutters, partition walls, or blocking and/or distributing elements.

2. The device according to claim 1, **characterized in that** the recesses (5) are divided over the length of the mixing/filtering body (1) by an axially extending partition wall (8), at the first longitudinal side of the partition wall (8), a first axially directed groove (9) being arranged, at the second longitudinal side of the partition wall (8), two additional axially directed grooves (10, 11) being arranged, which are separated by a web (12) extending in the circumferential direction from the partition wall (8) to the first groove (9), the first additional groove (10) being in connection by means of a hole with the front-side inlet opening (2), and the second additional groove (11) being in connection by means of holes (13) with the outlet opening (4) of the mixing / filtering body (1), which is formed by an axial hole in the other front side of the mixing/filtering body (1), the partition wall (8) bearing against the inner jacket of the jacket body.

3. The device according to claim 1, **characterized in that** the recesses (5) are divided over the length of the mixing/filtering body (1) by two opposing axially extending partition walls (8), at each first longitudinal side of each partition wall (8) a first groove (5) being arranged, at the second longitudinal side of each partition wall (8) two additional grooves (10, 11) being arranged, which are separated by a web (12) extending in the circumferential direction from the partition wall (8) to the respective first groove (9), each first additional groove (10) being in connection by means of a hole with the front-side inlet opening (2), and each second additional groove (11) being in connection by means of holes (13) with the outlet opening (4) of the mixing / filtering body (1), which is formed by an axial blind hole in the other front side of the mixing / filtering body (1), each partition wall (8) bearing against the inner jacket of the jacket body.

4. The device according to claim 1, **characterized in that** the mixing/filtering body (1) comprises on its outer surface two opposing first longitudinal grooves (14), each connected by means of a hole with the front-side inlet opening (2), and two additional opposing second longitudinal grooves (15) adjacent to the first longitudinal grooves (14) and connected by means of holes (17) with the outlet opening (4) of the mixing/filtering body (1), which is formed by an axial hole in the outlet front side of the mixing/filtering body (1), between the first longitudinal grooves (14) and the respectively adjacent second longitudinal groove (15), a separating web (16) being formed, bearing in the intended mounting position against the inner jacket of the jacket body.

5. The device according to claim 1 or 2, **characterized in that** the mixing/filtering body (1) comprises on its outer surface in parallel to each other longitudinal grooves (18) extending in the longitudinal direction of the cylindrical mixing/filtering body (1) and distributed over the periphery, every first one of the consecutive longitudinal grooves (18) being in connection by means of a hole with the front-side inlet opening (2), and every second longitudinal groove (18) being in connection by means of holes (19) with the outlet opening (4) of the mixing/filtering body (1), which is formed by an axial blind hole in the other front side of the mixing/filtering body (1).

6. The device according to one of claims 1 to 5, **characterized in that** the mixing/filtering body (1) has an enlarged diameter at the front-side inlet so to form a flange providing an axial stop for the jacket.

## Revendications

1. Dispositif pour mélanger et/ou filtrer de la masse fondue d'une machine à mouler par injection avec au moins une vis de convoyage et un canal chaud, le dispositif de préférence étant arrangé entre la vis de convoyage et le canal chaud de la machine à mouler par injection, consistant en un corps d'enveloppe, dans lequel un corps de mélange/filtrage (1) cylindrique est inséré, qui a dans la direction d'écoulement de la masse fondue à l'entrée frontale au moins une ouverture (2)/canal de type trou borgne, qui est en connexion par des premières voies de raccordement (3) avec le côté extérieur radial du corps de mélange/filtrage (1), qui est entouré par l'enveloppe, et qui comprend des deuxièmes voies de raccordement radiales, qui lient l'espace entouré par l'enveloppe avec une ouverture de sortie (4) de type trou borgne réalisée à l'autre côté frontal, entre les ouvertures des premières voies de raccordement (3) débouchant du côté extérieur du corps de mélange/ filtrage (1) et les ouvertures des deuxièmes voies de raccordement prévues dans le côté extérieur, des saillies, séparateurs d'écoulement, rigoles, parois de séparation ou éléments de blocage et/ou de distribution étant réalisés sur l'enveloppe, **caractérisé en ce que** les saillies, séparateurs d'écoulement, rigoles, parois de séparation ou éléments de blocage et/ou de distribution prévus sur le côté extérieur du corps de mélange/filtrage (1) sont réalisés par une pluralité d'évidements (5) environ en partie circulaires arrangés en une pluralité de lignes l'une derrière l'autre dans la direction axiale et répartis sur la périphérie, un autre évidement (5) identique suivant à chaque évidement (5) environ en partie circulaire dans la direction circonférentielle, et le sommet (7) des évidements (5) de la deuxième ligne étant axialement voisin à la vallée (6) de chaque évidement (5) en partie circulaire de la première ligne, et alternativement des lignes additionnelles d'évidements (5) suivant dans la direction axiale, qui sont respectivement arrangées dans une position décalée l'une par rapport à l'autre, de façon que respectivement chaque deuxième ligne soit orientée en coïncidence mutuelle, les sommets (7) butant contre l'enveloppe intérieure du corps d'enveloppe, et les deuxièmes voies de raccordement étant arrangées, vu dans la direction axiale, dans la même partie ou une partie se chevauchant comme les saillies, séparateurs d'écoulement, rigoles, parois de séparation ou éléments de blocage et/ou de distribution.

2. Dispositif selon la revendication 1, **caractérisé en ce que** les évidements (5) sur la longueur du corps de mélange/filtrage (1) sont séparés par une paroi de séparation (8) s'étendant axialement, au premier côté longitudinal de la paroi de séparation (8), une première rainure (9) orientée axialement étant arrangée, au deuxième côté longitudinal de la paroi de séparation (8), deux rainures (10, 11) additionnelles orientées axialement étant arrangées, qui sont séparées par une entretoise (12) s'étendant dans la direction circonférentielle à partir de la paroi de séparation (8) jusqu'à la première rainure (9), la première rainure (10) additionnelle étant en connexion au moyen d'un trou avec l'ouverture d'entrée (2) frontale, et la deuxième rainure (11) additionnelle étant en connexion au moyen de trous (13) avec l'ouverture de sortie (4) du corps de mélange/filtrage (1), qui est réalisé par un trou axial dans l'autre côté frontal du corps de mélange/filtrage (1), la paroi de séparation (8) abutant contre l'enveloppe intérieure du corps d'enveloppe.

3. Dispositif selon la revendication 1, **caractérisé en ce que** les évidements (5) sur la longueur du corps de mélange/filtrage (1) sont séparés par deux parois de séparation (8) s'étendant axialement et étant placées en vis-à-vis, une première rainure (5) étant arrangée à chaque premier côté longitudinal de chaque paroi de séparation (8), deux rainures (10, 11) additionnelles étant arrangées au deuxième côté longitudinal de chaque paroi de séparation (8), lesdites deux rainures (10, 11) additionnelles étant séparées par une entretoise (12) s'étendant dans la direction circonférentielle à partir de la paroi de séparation (8) à la première rainure (9) respective, chaque première rainure (10) additionnelle étant en connexion au moyen d'un trou avec l'ouverture d'entrée (2) frontale, et chaque deuxième rainure (11) additionnelle étant en connexion au moyen de trous (13) avec l'ouverture de sortie (4) du corps de mélange/filtrage (1), qui est réalisé par un trou borgne axial dans l'autre côté frontal du corps de mélange/filtrage (1), chaque paroi de séparation (8) abutant contre l'enveloppe intérieure du corps d'enveloppe.

4. Dispositif selon la revendication 1, **caractérisé en ce que** le corps de mélange/filtrage (1) comprend sur sa surface extérieure deux premières rainures longitudinales (14) placées en vis-à-vis, chacune raccordée au moyen d'un trou avec l'ouverture d'entrée (2) frontale et deux deuxièmes rainures longitudinales (15) additionnelles placées en vis-à-vis voisines aux premières rainures longitudinales (14) et raccordées au moyen de trous (17) avec l'ouverture de sortie (4) du corps de mélange/filtrage (1), qui est réalisé par un trou axial dans le côté frontal de sortie du corps de mélange/filtrage (1), une entretoise de séparation (16) étant réalisée entre les premières rainures longitudinales (14) et la deuxième rainure longitudinale (15) respectivement voisine, ladite entretoise de séparation (16) abutant dans la position de montage de consigne contre l'enveloppe intérieure du corps d'enveloppe.

5. Dispositif selon la revendication 1 ou 2, **caractérisé en ce que** le corps de mélange/filtrage (1) comprend sur sa surface extérieure en parallèle l'une à l'autre des rainures longitudinales (18) s'étendant dans la direction longitudinale du corps de mélange/filtrage (1) cylindrique et étant réparties sur la périphérie, chaque première des rainures longitudinales (18) consécutives étant en connexion au moyen d'un trou avec l'ouverture d'entrée (2) frontale, et chaque deuxième rainure longitudinale (18) étant en connexion au moyen de trous (19) avec l'ouverture de sortie (4) du corps de mélange/filtrage (1), qui est réalisé par un trou borgne axial dans l'autre côté frontal du corps de mélange/filtrage (1).

6. Dispositif selon une des revendications 1 à 5, **caractérisé en ce que** le corps de mélange/filtrage (1) a un diamètre agrandi au côté d'entrée frontal, donc formant une bride et une butée axiale pour l'enveloppe.
